(19) Europäisches Patentamt
European Patent Office
Office européen des brevets

(11) Veröffentlichungsnummer: **0 027 158**
**B1**

(12) # EUROPÄISCHE PATENTSCHRIFT

(45) Veröffentlichungstag der Patentschrift: **25.07.84**

(51) Int. Cl.³: **C 08 G 12/00,**
B 01 J 20/22, C 02 F 1/28

(21) Anmeldenummer: **80103588.2**

(22) Anmeldetag: **25.06.80**

(54) **Kationisches Adsorptionsmittel, Verfahren zu seiner Herstellung und seine Verwendung zur Entfernung von anionischen Stoffen aus wässerigen Lösungen.**

(30) Priorität: **28.06.79 CH 6036/79**
**04.02.80 CH 869/80**

(43) Veröffentlichungstag der Anmeldung:
**22.04.81 Patentblatt 81/16**

(45) Bekanntmachung des Hinweises auf die Patenterteilung:
**25.07.84 Patentblatt 84/30**

(84) Benannte Vertragsstaaten:
**AT BE CH DE FR GB IT LI NL SE**

(56) Entgegenhaltungen:
**BE - A - 513 849**
**FR - A - 782 195**
**FR - A - 927 696**
**FR - A - 2 332 362**

**Beilsteins Handbuch, Hauptwerk, 4 Auflage, Bd. 26, Seiten 245,246**

(73) Patentinhaber: **CIBA-GEIGY AG**
**Postfach**
**CH-4002 Basel (CH)**

(72) Erfinder: **Wurster, Rudolf F.**
**In der Helgenmatt 7**
**CH-4148 Pfeffingen (CH)**
Erfinder: **Merz, Jürg, Dr.**
**Hochfeldweg 25**
**CH-4106 Therwil (CH)**

(74) Vertreter: **Zumstein, Fritz sen., Dr. et al,**
**Bräuhausstrasse 4**
**D-8000 München 2 (DE)**

**EP 0 027 158 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft ein kationisches Adsorptionsmittel, das geeignet ist, anionische Stoffe aus wässerigen Lösungen, insbesondere aus Abwässern, wie z.B. Filtraten, Restflotten von Bleich- oder Färbeverfahren, Spül- und Waschwässern, zu entfernen.

Das neue Adsorptionsmittel ist dadurch gekennzeichnet, dass es durch Umsetzung einer (a) Aminoverbindung der Formel

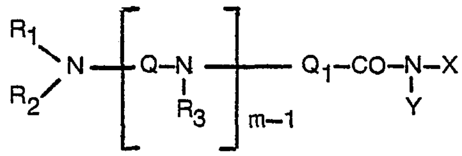 , (1)

worin

m 1 bis 5 ist,

$R_1$, $R_2$ und $R_3$ unabhängig voneinander Wasserstoff, gegebenenfalls durch Halogen, Hydroxyl, Niederalkoxy oder Cyano substituiertes Niederalkyl, Cycloalkyl, Benzyl oder die Gruppe der Formel

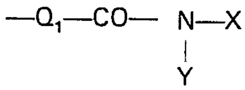 (2)

oder

$R_1$ und $R_2$ zusammen mit dem sie verbindenden Stickstoffatom einen fünf- oder sechsgliedrigen heterocyclischen Rest, vorzugsweise Pyrrolidino, Piperidino, Morpholino oder Piperazino, oder falls m 2 ist,

$R_2$ und $R_3$ zusammen mit der sie verbindenden Gruppierung

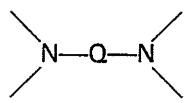

einen zweiwertigen, fünf- oder sechsgliedrigen heterocyclischen Rest, insbesondere einen Imidazolidino- oder Piperazinoring, oder

falls m mehr als 2 ist, jedes $R_3$ oder einzelne $R_3$ zusammen mit dem benachbarten $R_3$ und mit der sie verbindenden Gruppierung

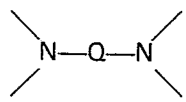

auch einen fünf- oder sechsgliedrigen, zweiwertigen heterocyclischen Rest, insbesondere einen Piperazinoring,

Q und $Q_1$ unabhängig voneinander Alkylen mit 1 bis 8 Kohlenstoffatomen,

X Wasserstoff oder $—CH_2OH$ und

Y Wasserstoff, Niederalkyl oder $—CH_2OH$

bedeuten,

mit einem

(b) gegebenenfalls verätherten Additionsprodukt von Formaldehyd an eine Harnstoff-, Thioharnstoff- oder Amino-1,3,5-Triazinverbindung

in neutralem bis saurem wässerigen Medium hergestellt worden ist.

Die Komponenten (a) und (b) enthalten zusammen zweckmässigerweise mindestens zwei N-Methylolamidgruppen.

Unter den Aminoverbindungen der Formel (1) sind diejenigen, worin m 1 oder 2 ist, bevorzugt und die Mono- oder Diaminoverbindungen darstellen.

Besonders bevorzugt sind als Komponente (a) Mono- und Diaminoverbindungen, die der Formel

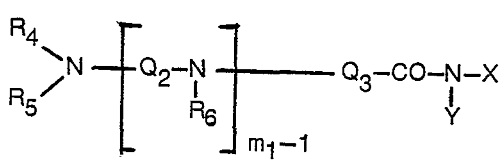 (3)

entsprechen, worin

$m_1$ 1 oder 2 ist,

$R_4$, $R_5$ und $R_6$ unabhängig voneinander Wasserstoff, Niederalkyl, Benzyl oder die Gruppe der Formel

$$-Q_3-CO-\underset{\substack{|\\ Y}}{N}-X \qquad (4)$$

oder $R_4$ und $R_5$ zusammen mit dem sie verbindenden Stickstoffatom einen fünf- oder sechsgliedrigen, heterocyclischen Rest, insbesondere Pyrrolidino, Piperidino oder Morpholino, oder falls $m_1$ 2 ist,

$R_5$ und $R_6$ zusammen mit der sie verbindenden Gruppierung

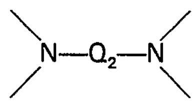

einen Piperazinoring und

$Q_2$ und $Q_3$ unabhängig voneinander $C_1$—$C_3$-Alkylen bedeuten, und X und Y die angegebene Bedeutung haben. Dabei sind Aminoverbindungen der Formel (3), worin $m_1$ 1 ist und die nur eine einzige Gruppierung der Formel (4) aufweisen noch bevorzugter. Hierzu ist $Q_3$ vorzugsweise Niederalkyl. Y ist besonders Wasserstoff und X ist vorzugsweise —$CH_2OH$.

Niederalkyl und Niederalkoxy stellen bei der Definition der Reste der neuen Verbindungen in der Regel solche Gruppen oder Gruppenbestandteile dar, die 1 bis 5, insbesondere 1 bis 3 Kohlenstoffatome aufweisen, wie z.B. Methyl, Aethyl, n-Propyl, Isopropyl, n-Butyl, sek.-Butyl oder Amyl bzw. Methoxy, Aethoxy oder Isopropoxy.

Halogen in Verbindung mit sämtlichen Substituenten bedeutet beispielsweise Fluor, Brom oder vorzugsweise Chlor.

Geeignete Harnstoff- und Thioharnstoffverbindungen zur Herstellung der Komponenten (b) sind Harnstoff, Thioharnstoff, substituierte Harnstoffe wie Alkyl- oder Arylharnstoffe, Alkylenharnstoffe und -diharnstoffe wie Aethylenharnstoff, Propylenharnstoff, Dihydroxyäthylenharnstoff, Hydroxypropylenharnstoff und Acetylendiharnstoff, ferner Dicyandiamid, Dicyandiamidin, Urone und Hexahydropyrimidone.

Als Amino-1,3,5-triazine seien z.B. genannt: Melamin, N-substituierte Melamine wie z.B. N-Methyl-, N-Aethyl-, N-Propyl- und N-Butyl-melamin, Triazone, Ammelin, Guanamine wie z.B. Benzoguanamin, Diguanamine sowie Guanidine.

Als Additionsprodukte gemäß (b) eignen sich sowohl vorwiegend monomolekulare Verbindungen als auch höher vorkondensierte Produkte.

Wertvolle Produkte liefern im allgemeinen sowohl vollständig als auch nur teilweise methylolierte Produkte, die gegebenenfalls auch veräthert sein können.

Bevorzugt werden die Methylolverbindungen der genannten Harnstoffe und Amino-1,3,5-triazine. Unter diesen Verbindungen sind vor allem N-Methylolharnstoffe und N-Methylolmelamine besonders hervorzuheben. Auch Teiläther derartiger Methylolverbindungen wie z.B. mit Alkanolen von 1 bis 4 Kohlenstoffatomen, wie Methanol, Aethanol, n-Propanol oder n-Butanol können verwendet werden.

Als spezifische Additionsprodukte gemäß (b) seien erwähnt:
N,N'-Dimethylolharnstoff, Methylolharnstoff,
N,N'-Dimethylolharnstoff-dimethyläther,
N,N'-Tetramethylolacetylendiharnstoff,
N,N'-Dimethyloläthylenharnstoff,
N,N'-Dimethylolpropylenharnstoff,
4,5-Dihydroxy-N,N'-dimethyloläthylenharnstoff,
N,N'-Dimethylol-5-hydroxypropylenharnstoff,
4-Methoxy-5,5-dimethyl-N,N'-dimethylolpropylenharnstoff,
N,N'-Dimethylol-5-oxapropylenharnstoff,
4,5-Dihydroxy-N,N'-dimethyloläthylenharnstoffdimethyläther,
Dimethylolmelamin, Trimethylolmelamin, Tetramethylolmelamin, Hexamethylolmelamin, Hexamethylolmelaminpentamethyläther, Pentamethylolmelamin-di- oder -tris-methyläther, Hexamethylolmelaminhexamethyläther oder -hexaäthyläther. Darunter sind N,N'-Dimethylolharnstoff, Tris- bis Hexamethylolmelamine besonders bevorzugt.

Es können auch Gemische dieser methylolierten Harnstoff-, und Melaminverbindungen verwendet werden.

Die Herstellung der neuen kationischen Adsorptionsmittel erfolgt durch Umsetzen einer

(a) Aminoverbindung der Formel (1)

mit einem

(b) gegebenenfalls verätherten Additionsprodukt von Formaldehyd an eine Harnstoff-, Thioharnstoff- oder Amino-1,3,5-Triazinverbindung oder dessen Bildungsgemisch in neutralem bis saurem wässerigen Medium.

Die Umsetzung erfolgt in einem neutralen oder sauren Medium z.B. bei einem pH-Wert von 2 bis 7 und vorteilhafterweise bei einer Temperatur von 20 bis 200°C, vorzugsweise 50 bis 180°C und insbesondere 60 bis 120°C. Vorzugsweise wird ein Katalysator verwendet. Bevorzugte Katalysatoren sind anorganische und/oder organische Säuren oder deren Anhydride oder Salze, z.B. schwefelige Säure, Schwefelsäure, Sulfaminsäure, Phosphorsäure, Salzsäure, Chloressigsäure, Maleinsäure oder deren Anhydrid, ferner Ammoniumchlorid, Ammoniumnitrat, Ammoniumphosphat, Ammoniumacetat oder Aluminiumsulfat. Besonders bevorzugt ist Sulfaminsäure.

Vorteilhafterweise ist das erfindungsgemässe Adsorptionsmittel aus

1 Mol der Komponente (a) und

0,2 bis 10 Mol, vorzugsweise 0,2 bis 3,5 Mol und insbesondere

0,5 bis 2 Mol der Komponente (b)

aufgebaut.

Die somit erhaltenen Umsetzungsprodukte enthalten in der Regel mindestens 1 Gew.%, vorzugsweise 2 bis 6 Gew.% basischen Stickstoff. Der gesamte Stickstoffgehalt, welcher auch den Amidstickstoff umfasst, beträgt in der Regel mindestens 10 Gew.%, vorzugsweise 15 bis 30 Gew.%.

Das erfindungsgemässe Adsorptionsmittel eignet sich vor allem zur Entfernung von anionischen Stoffen aus wässerigen Lösungen, insbesondere aus Abwässern, wobei die Leistungsfähigkeit des neuen Adsorptionsmittels bedeutend höher ist als diejenige, die mit den herkömmlichen Adsorptionsmitteln erreicht wird. Insbesondere zeichnen sich die neuen Adsorptionsmittel gegenüber den bekannten Mitteln wie z.B. Aktivkohle, durch hohe Aufnahmefähigkeit für in Wasser gelöste oder dispergierte, besonders anionische Stoffe aus.

Gegenstand vorliegender Erfindung ist demnach auch ein Verfahren zur Entfernung von anionischen Stoffen aus wässerigen Lösungen, welches dadurch gekennzeichnet ist, dass man die wässerigen Lösungen mit den erfindungsgemässen kationischen Adsorptionsmitteln in Kontakt bringt.

Dieses Verfahren eignet sich vor allem zur Reinigung von wässerigen Flotten, welche organische anionische Stoffe bzw. deren Gemische enthalten. Insbesondere lassen sich anionische Farbstoffe, Aufheller, Färberei- oder Textilhilfsmittel, Tenside, Gerbstoffe und Mischungen davon in befriedigendem Ausmass den Abwässern entziehen. Erfindungsgemäss können Abwässer, welche Mischungen von anionischen Farbstoffen mit anionischen Hilfsmitteln enthalten, erfolgreich gereinigt werden.

Dank der grossen Anwendungsbreite des neuen Adsorptionsmittels ist es möglich, eine heute immer dringender geforderte Einsparung von Frischwasser durch teilweise bis vollständige Rezirkulation von anfallenden Rest- oder Abfallflotten zu erreichen. Dabei handelt es sich unabhängig von den apparativen Einrichtungen vor allem um die im Zusammenhang mit Färbe-, Bleich, Wasch- und Gerbeprozessen anfallenden Abwässer der Farbstoff-, Faser-, Textil-, Zellstoff-, Papier- und Lederindustrie. Diese können z.B. im Falle einer Färberei aus den üblichen Färbeapparaturen, wie sie für die Färbung von losem Fasermaterial, von Kammzug, von Garn und Geweben bzw. Gewirken verwendet werden, wie auch aus Reinigungsvorrichtungen z.B. aus einer Breitwaschmaschine, entstammen.

Die Reinigung der Abwässer wird zweckmässig bei 2 bis 150°C vorgenommen. Vorzugsweise erfolgt sie jedoch bei 10 bis 100°C, insbesondere bei 20 bis 70°C. Falls es erwünscht ist, kann die Reinigung der Abwässer auch unter Druck oder Vakuum erfolgen. Der pH-Wert der Abwässer kann in weiten Grenzen variieren, z.B. von 2 bis 12. pH-Korrekturen, z.B. auf einen Wert von 2 bis 9, insbesondere 3 bis 8 können jedoch, je nach der Natur des verwendeten Adsorptionsmittels das Reinigungsverfahren erleichtern und beschleunigen.

Die Behandlung der Abwässer kann diskontinuierlich, semikontinuierlich oder kontinuierlich durchgeführt werden. Prinzipiell sind im Sinne der Erfindung folgende Ausführungsformen geeignet:

(a) sogenanntes Rühr-Verfahren, wobei das zu reinigende Wasser in einem Gefäss oder einer Reihe von Gefässen mit dem Adsorptionsmittel verrührt und dann abgetrennt wird;

(b) sogenanntes Fliessbett-Verfahren, in dem das Adsorptionsmittel durch die Strömung der zu reinigenden Flotte im Schwebezustand gehalten wird;

(c) sogenanntes Festbett-Verfahren, wobei die zu reinigende Flotte durch ein filterartig angeordnetes Adsorptionsmittel geführt wird.

Wird aus diesen drei Verfahrensvarianten das Festbett-Verfahren (c) angewendet, so eignen sich vor allem folgende drei apparative Varianten:

1. Der Behandlungsapparat wird mit der Adsorber-Einrichtung fest verbunden.
2. Die Adsorber-Einrichtung ist beweglich und kann nach Bedarf mit jeder Behandlungsapparatur gekoppelt werden.
3. Die aus den Behandlungsflotten entstammenden Abwässer werden in einem geeigneten Behälter vereinigt und hierauf gemeinsam durch das Adsorptionsmittel geführt.

Falls erwünscht, kann das erfindungsgemäss zu verwendende kationische Adsorptionsmittel mit anderen Ionenaustauschern oder Adsorbentien wie z.B. Aktivkohle und/oder anderen bekannten Filtrationshilfsmitteln, wie z.B. Torf, Kieselgur oder Diatomeenerde vermischt werden. In diesem Falle wird z.B. die Aktivkohle zu dem neuen Absorptionsmittel in Mengen von 2 bis 95 Gew.%, vorzugsweise 10

bis 70 Gew.%, berechnet auf das Gewicht des kationischen Adsorptionsmittels zugesetzt.

Als Farbstoffe, die erfindungsgemäss aus den Abwässern entfernt werden, können sowohl wasserlösliche als auch in Wasser dispergierte, anionische Farbstoffe oder optische Aufheller in Betracht kommen. Bevorzugt eignet sich das erfindungsgemässe Verfahren zur Entfernung von wasserlöslichen anionischen Farbstoffen oder optischen Aufhellern.

Bei den anionischen Farbstoffen handelt es sich um Farbstoffe, deren anionischer Charakter durch Metallkomplexbildung allein und/oder durch die Wasserlöslichkeit bewirkende saure Substituenten bedingt ist. Als derartige, die Wasserlöslichkeit bewirkende saure Substituenten kommen Carbonsäuregruppen, Phosphorsäuregruppen, acylierte Sulfonsäureimidgruppen, wie Alkyl- oder Aryldisulfimid- bzw. Alkyl- oder Arylcarbonylsulfimidgruppen, Alkyl- oder Arylimidgruppen, Schwefelsäureester- und vor allem Sulfonsäuregruppen in Betracht.

Die anionischen Farbstoffe können den verschiedensten Farbstoffklassen angehören. Beispielsweise seien Oxazin-, Triphenylmethan-, Xanthen-, Nitro-, Acridon-, Stilben-, Perinon-, Naphthochinonimin-, Phthalocyanin-, Anthrachinon- und Azofarbstoffe genannt. Die letzteren können metallfreie, metallisierbare oder metallhaltige Mono-, Dis- und Polyazofarbstoffe, einschliesslich der Formazanfarbstoffe sein, worin das Metallatom einen 1:1- oder 1:2-Komplex, insbesondere 1:2-Chrom- oder 1:2-Kobaltkomplexe bildet, die zwei gleiche oder zwei verschiedene Mokeküle Azofarbstoff komplex an ein Chrom- oder Kobaltatom gebunden enthalten. Diese Farbstoffe können im Molekül auch sogenannte reaktive Gruppierungen, welche mit dem zu färbenden Fasermaterial eine kovalente Bindung eingehen, aufweisen.

Das neue Adsorptionsmittel eignet sich nicht nur zur Entfärbung von in der Farbstoff-Fabrikation, Textil-, bzw. Papier-, bzw. LederFärberei anfallenden Restflotten, sondern leistet überdies auch gute Dienste, wenn es darum geht, Reste von anionischen optischen Aufhellern aus Wasch- und Bleichflotten zu entfernen.

Die optischen Aufheller können beliebigen Aufhellerklassen angehören. Bei den anionischen Aufhellern handelt es sich insbesondere um Stilbenverbindungen, Pyrazoline, Dibenzoxazolyl- oder Dibenzimidazolylverbindungen oder Naphthalsäureimide, welche im Molekül mindestens eine saure Gruppe, wie Carbonsäure- oder vorzugsweise eine Sulfonsäuregruppe aufweisen und faserreaktive sein können.

Ein weiterer Vorteil des neuen kationischen Adsorptionsmittels beruht darauf, dass es mindestens teilweise nebst den Farbstoffen auch eine Eliminierung von nicht-ionischen und anionischen Tensiden und Textil- und Färbereihilfsmitteln sowie Phosphaten aus wässerigen Restflotten gestattet. Solche Hilfsmittel sind im Buch "Tenside-Textilhilfsmittel-Waschrohstoffe" von Dr. Kurt Lindner (herausgegeben von Wissenschaftlicher Verlagsgesellschaft Stuttgart 1964) näher beschrieben.

Das kationische Adsorptionsmittel kann auch dort Hilfe leisten, wo es sich um Eliminierung von anionischen, synthetischen Gerbstoffen, insbesondere Gerbstoffen, die in dem Molekül eine oder mehrere Sulfogruppen tragen, handelt. Eine nähere Beschreibung dieser Verbindungen befindet sich z.B. in "Ullmans Encyklopädie der technischen Chemie" Band 11, Seiten 595 bis 598. Das kationische Adsorptionsmittel dient auch als allgemeiner Anionenaustauscher.

Durch geeignete Wahl des Adsorptionsmittels können erfindungsgemäss den Abwässern bis zu 100% der gelösten Verunreinigung entzogen werden. Es können dabei Rückhaltewirkungen bis zu 50 g Reststoff, d.h. Farbstoff, optische Aufheller, Hilfsmittel, Waschmittel, Gerbstoff pro 100 g Adsorptionsmittel erreicht werden. Vorzugsweise werden Restflotten entfärbt, deren Farbstoffkonzentration 0,01 bis 1 g/l beträgt. In Fällen in denen es nicht gelingt, eine vollständige Entfärbung bzw. Entfernung von den Reststoffen durch eine einmalige Behandlung der Restflotte mit dem neuen Adsorptionsmittel zu erreichen, empfiehlt es sich, den Reinigungsvorgang zu wiederholen.

Nach der Adsorption der Verunreinigungen lassen sich die beladenen Adsorptionsmittel leicht von dem gereinigten Abwasser abtrennen. Sie weisen einen hohen Feststoffgehalt auf und können deshalb ohne Trocknungsvorgang direkt verbrannt werden. Gewünschtenfalls können sie auch mit Hilfe z.B. einer verdünnten, wässerigen Natriumhydroxidlösung regeneriert werden.

In den folgenden Beispielen sind Prozente immer Gewichtsprozente.

### Beispiel 1

8,6 g einer 40%igen wässerigen Lösung der Verbindung der Formel

(11) $$(C_2H_5)_2\ N—CH_2CH_2—CONH—CH_2OH$$

werden mit 4,8 g N,N'-Dimethylolharnstoff versetzt, worauf die Mischung mit konz. Salzsäure auf einen pH-Wert von 3 gestellt wird. Danach wird die saure Mischung unter intensivem Rühren auf 150°C erhitzt und während 15 Minuten bei dieser Temperatur gehalten, wobei das Wasser entfernt und die Reaktionsmasse hart wird. Nach einer weiteren Kondensationsdauer von 15 Stunden erhält man 8 g eines Kondensationsproduktes mit einem Stickstoffgehalt von 22,4%.

### Beispiele 2 bis 9

Verfährt man wie im Beispiel 1 beschrieben, verwendet jedoch anstelle der dort angegebenen

Reaktionspartner, jeweils die in der folgenden Tabelle 1, in den 2. und 3. Spalten aufgeführten Ausgangsstoffe, in den dort genannten Mengen und bei dem in der 4. Spalte angegebenen pH-Wert, so erhält man Reaktionsprodukte, die den in der 5. Spalte angegebenen Stickstoffgehalt aufweisen.

Tabelle 1

| Bsp. | Aminoplast-Vorkondensat g | | Aminoverbindung g | | pH | N-Gehalt in % |
|---|---|---|---|---|---|---|
| 2 | 7,2 | N,N'-Dimethylolharnstoff | 8,6 | Formel (11) | 3 | 18 |
| 3 | 2,4 | do | 8,6 | Formel (11) | 7 | 22,4 |
| 4 | 4,8 | do | 2,8 | 2-N,N-Diäthylamino-propionsäureamid | 3 | 23,1 |
| 5 | 4,8 | do | 4 | N,N'-Diacetoamido-piperazin | 3 | 27,1 |
| 6 | 4,8 | do | 2,3 | N,N'-β-Dipropion-amidopiperazin | 3 | 21,7 |
| 7 | 4,8 | do | 3,8 | N-β-Propionamido-piperidin | 3 | 25,8 |
| 8 | 4,8 | do | 2,28 | N,N-Diäthyl-N',N'-β-dipropionamido-propylendiamin | 3 | 21,7 |
| 9 | 4,3 | N,N'-N''-Trimethylolmelamin | 8,6 | Formel (11) | 3 | 25,3 |

Biespiel 10

8,6 g einer 40%-igen wässerigen Lösung der Verbindung der Formel (11) werden mit 3,4 g Formaldehyd (35,7%) und 2,4 g Harnstoff versetzt, worauf die Mischung mit konz. Salzsäure auf einen pH-Wert von 3 gestellt wird. Danach wird die saure Mischung unter intensiven Rühren auf 150°C erhitzt und während 15 Minuten bei dieser Temperatur gehalten, wobei das Wasser entfernt und die Reaktionsmasse hart wird, Nach einer weiteren Kondensationsdauer von 15 Stunden erhält man ein Kondensationsprodukt mit einem Stickstoffgehalt von 17,2%.

Biespiel 11

537,5 g einer 40%-igen wässerigen Lösung der Verbindung der Formel (11) werden auf pH 4,0 gestellt, mit 330 g N,N'-Dimethylolharnstoff versetzt und unter Rühren vermischt, wobei ein milchiges Gemisch entsteht. Dieses Gemisch wird unter Rühren auf 60°C aufgeheizt und mit 23 g 15%-iger Sulfaminsäure versetzt, wobei die Temperatur im Verlauf von 8 Minuten auf 68°C steigt und die Reaktionsmasse erstarrt. Alsdann wird diese Reaktionsmasse bis zum Rückfluss aufgeheizt (98°C), wobei nach 10 Minuten, durch das Schmelzen an der Glaswand, der Rührer wieder eingeschaltet werden kann. Nach einer weiteren Kondensationsdauer von 1 Stunde erhält man ein dickviskoses rohes Kondensationsprodukt, das auf Trocknungsbleche ausgetragen wird. Nach Entfernung des Wassers bei 90°C und Trocknung des Rückstandes bei 110°C während 12 Stunden und anschliessender Reinigung durch Waschen mit Wasser erhält man 390 g eines reinen Produktes mit einem Stickstoffgehalt von 25,8%. Das trockene Pulver wird mittels einer Schlagmühle auf eine Korngrösse von kleiner als 100 $\mu$ gemahlen. Aehnlich gute Adsorptionsmittel mit einem Stickstoffgehalt von 18 bis 25% werden erhalten, wenn anstelle von Sulfaminsäure, Ammoniumnitrat, Ammoniumphosphat oder Ammoniumchlorid als Katalysator oder anstelle von Dimethylolharnstoff, Trimethylolmelamindimethyläther, Hexamethylolmelamin, N,N-Dimethylolluron-dimethyläther oder Hexamethylolmelaminhexamethyläther eingesetzt werden.

Beispiele 12—21

In einem Rührreaktor werden 5 l einer rot gefärbten, auf einen pH-Wert von 3 oder 7 gestellten Restflotte, welche noch 100 mg/l des Farbstoffes der Formel

(100)

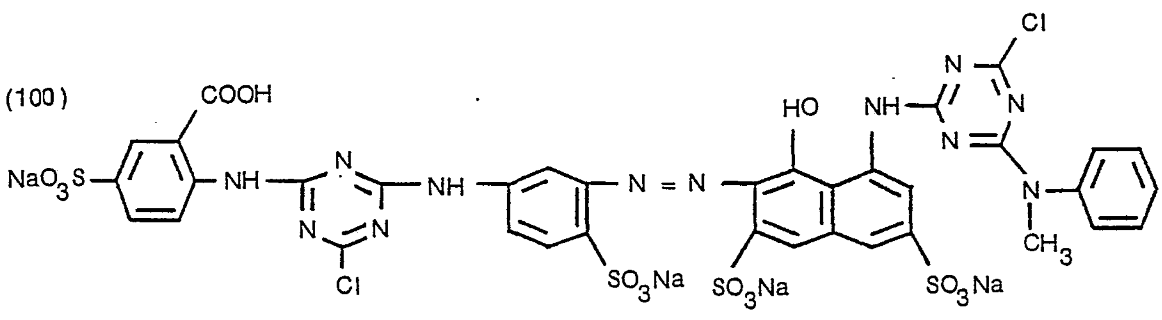

in gelöster Form enthält, vorgelegt, Die Farbflotte wird auf eine Temperatur von 50°C aufgeheizt und mit jeweils 0,5 g der gemäss den Beispielen 1 bis 10 hergestellten Anionenaustauscher in Pulverform versetzt. Bei jedem Versuch wird nach einer Adsorptionsdauer von x Minuten eine Probe entnommen, welche über ein Faltenfilter filtriert wird und die in der Tabelle 2 angegebene prozentuale Entfärbung des Filtrates ermittelt.

Tabelle 2

| Bsp. | Adsorbens hergestellt gemäss Beispiel | pH | Adsorptionsdauer in Minuten | %Entfärbung |
|---|---|---|---|---|
| 12 | 1 | 7 | 60 | 65,8 |
| 13 | 2 | 7 | 60 | 21.6 |
| 14 | 3 | 7 | 60 | 27,2 |
| 15 | 4 | 3 | 60 | 46,5 |
| 16 | 5 | 3 | 60 | 32 |
| 17 | 6 | 3 | 60 | 18,9 |
| 18 | 7 | 3 | 5 | 80,5 |
| 19 | 8 | 3 | 60 | 15,2 |
| 20 | 9 | 7 | 60 | 6,9 |
| 21 | 10 | 7 | 60 | 21,5 |

Beispiel 22

In einem Becherglas wird eine Lösung von 500 mg eines Farbstoffes der Formel (100) in 500 ml Wasser mit einer Natrium-carbonatlösung auf pH 7 gestellt. Diese Farbstofflösung wird unter Rühren bei 50°C mit 500 mg des gemäss Beispiel 11 hergestellten Kondensationsproduktes versetzt und 60 Minuten bei dieser Temperatur gehalten. Die so behandelte Farbstofflösung enthält nur 125 mg Farbstoff, was einer 75%-igen Entfärbung entspricht. Das Farbstoffpräzipitat wird abfiltriert, wobei des feuchte Filtergut einen Trockengehalt von 50% aufweist und ohne weiteren Eindampfvorgang direkt verbrannt werden kann.

**Patentansprüche für die Vertragsstaaten: BE CH DE FR GB IT LI NL SE**

1. Kationisches Adsorptionsmittel, dadurch gekennzeichnet, dass es durch Umsetzung einer (z) Aminoverbindung der Formel

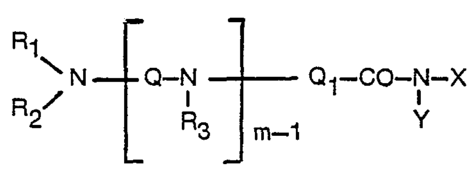

(1)

worin

m 1 bis 5 ist,

$R_1$, $R_2$ und $R_3$ unabhängig voneinander Wasserstoff, gegebenenfalls durch Halogen, Hydroxyl, Niederalkoxy oder Cyano substituiertes Niederalkyl, Cycloalkyl, Benzyl oder die Gruppe der Formel

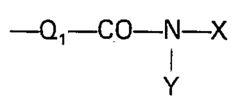

(2)

oder

$R_1$ und $R_2$ zusammen mit dem sie verbindenden Stickstoffatom einen fünf- oder sechsgliedrigen heterocyclischen Rest oder falls m 2 ist,

$R_2$ und $R_3$ zusammen mit der sie verbindenden Gruppierung

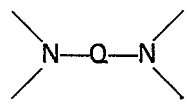

einen zweiwertigen, fünf- oder sechsgliedrigen, heterocyclischen Rest, oder

falls m mehr als 2 ist, jedes $R_3$ oder einzelne $R_3$ zusammen mit dem benachbarten $R_3$ und mit der sie verbindenden Gruppierung

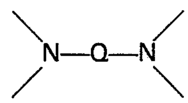

auch einen zweiwertigen, fünf- oder sechsgliedrigen, heterocyclischen Rest,

Q und $Q_1$ unabhängig voneinander Alkylen mit 1 bis 8 Kohlenstoffatomen, und

X Wasserstoff oder $—CH_2OH$,

Y Wasserstoff, Niederalkyl oder $—CH_2OH$ bedeuten,

mit einem

(b) gegebenenfalls verätherten Additionsprodukt von Formaldehyd an eine Harnstoff-, Thioharnstoff- oder Amino-1.3,5-Triazinverbindung

in neutralem bis saurem wässerigen Medium hergestellt worden ist.

2. Adsorptionsmittel gemäss Anspruch 1, dadurch gekennzeichnet, dass die Komponente (a) eine Aminoverbindung der Formel (1) ist, worin m 1 oder 2 ist.

3. Adsorptionsmittel gemäss Anspruch 2, dadurch gekennzeichnet, dass die Komponente (a) eine Aminoverbindung der Formel

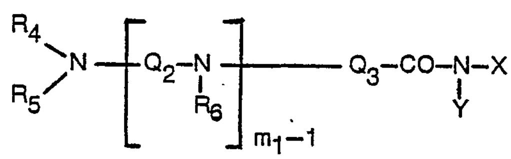

(3)

ist, worin

$m_1$ 1 oder 2 ist,

$R_4$, $R_5$ und $R_6$ unabhängig voneinander Wasserstoff, Niederalkyl, Benzyl oder die Gruppe der Formel

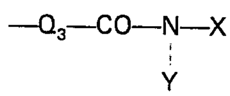

(4)

oder $R_4$ und $R_5$ zusammen mit dem sie verbindenden Stickstoffatom einen fünf- oder sechsgliedrigen, heterocyclischen Rest, oder falls $m_1$ 2 ist,

$R_5$ und $R_6$ zusammen mit der sie verbindenden Gruppierung

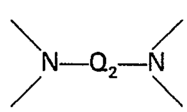

einen Piperazinring und

$Q_2$ und $Q_3$ unabhängig voneinander $C_1$—$C_3$-Alkylen bedeuten und X und Y die in Anspruch 1 angegebene Bedeutung haben.

4. Adsorptionsmittel gemäss Anspruch 3, dadurch gekennzeichnet, dass die Komponente (a) eine Aminoverbindung der Formel (3) ist, worin $R_4$, $R_5$ und $R_6$ Wasserstoff, Niederalkyl oder Benzyl bedeuten.

5. Adsorptionsmittel gemäss Anspruch 3, dadurch gekennzeichnet, dass die Komponente (a) eine Aminoverbindung der Formel (3) ist, worin $m_1$ 1 ist.

6. Adsorptionsmittel gemäss Anspruch 5, dadurch gekennzeichnet, dass die Komponente (a) eine Aminoverbindung der Formel (3) ist, worin $Q_3$ Aethylen oder Propylen, $R_4$ und $R_5$ Niederalkyl, Y Wasserstoff und X $—CH_2OH$ bedeuten.

7. Adsorptionsmittel gemäss Anspruch 1, dadurch gekennzeichnet, dass die Komponenten (a) und (b) zusammen mindestens zwei N-Methylolamidgruppen aufweisen.

8. Adsorptionsmittel gemäss einem der Ansprüche 1 bis 7, dadurch gekennzeichnet, dass als Komponente (b) methylolierte Harnstoffe oder Amino-1,3,5-triazine, die gegebenenfalls veräthert sind, verwendet werden.

9. Adsorptionsmittel gemäss Anspruch 8, dadurch gekennzeichnet, dass als Komponente (b) N-Methylol-harnstoffe oder N-Methylolmelamine und vorzugsweise N,N'-Dimethylolharnstoff oder Tris-bis Hexamethylolmelamin verwendet werden.

10. Verfahren zur Herstellung eines kationischen Adsorptionsmittels, dadurch gekennzeichnet, dass man eine

(a) Aminoverbindung der Formel

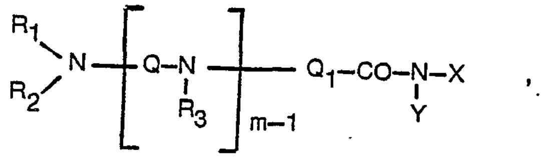
,  (1)

worin

m 1 bis 5 ist,

$R_1$, $R_2$ und $R_3$ unabhängig voneinander Wasserstoff, gegebenenfalls durch Halogen, Hydroxyl, Niederalkoxy oder Cyano substituiertes Niederalkyl, Cycloalkyl, Benzyl oder die Gruppe der Formel

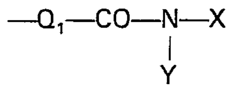
(2)

oder

$R_1$ und $R_2$ zusammen mit dem sie verbindenden Stickstoffatom einen fünf- oder sechsgliedrigen heterocyclischen Rest oder falls m 2 ist,

$R_2$ und $R_3$ zusammen mit der sie verbindenden Gruppierung

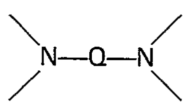

einen zweiwertigen, fünf- oder sechsgliedrigen, heterocyclischen Rest, oder

falls m mehr als 2 ist, jedes $R_3$ oder einzelne $R_3$ zusammen mit dem benachbarten $R_3$ und sie Verbindenden Gruppierung

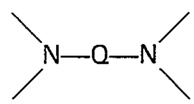

auch einen zweiwertigen, fünf- oder sechsgliedrigen, heterocyclischen Rest,

Q und $Q_1$ unabhängig voneinander Alkylen mit 1 bis 8 Kohlenstoffatomen, und

X Wasserstoff oder $—CH_2OH$,

Y Wasserstoff, Niederalkyl oder $—CH_2OH$ bedeuten,

mit einem

(b) gegebenenfalls verätherten Additionsprodukt von Formaldehyd an eine Harnstoff-, Thioharnstoff- oder Amino-1,3,5-Triazinverbindung oder dessen Bildungsgemisch in neutralem bis saurem wässerigem Medium umsetzt.

11. Verfahren gemäss Anspruch 10, dadurch gekennzeichnet, dass die Umsetzung in Gegenwart eines Katalysators, vorzugsweise Sulfaminsäure durchgeführt wird.

12. Verwendung ver kationischen Adsorptionsmittel, wie sie in den Ansprüchen 1 bis 9 definiert sind, zur Entfernung von anionischen Stoffen aus wässerigen Lösungen.

**Patentansprüche für den Vertragsstaat: AT**

1. Verfahren zur Herstellung eines kationischen Adsorptionsmittels, dadurch gekennzeichnet, dass man eine

(a) Aminoverbindung der Formel

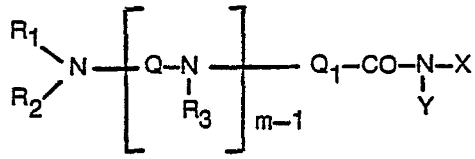
(1)

worin

m 1 bis 5 ist,

$R_1$, $R_2$ und $R_3$ unabhängig voneinander Wasserstoff, gegebenenfalls durch Halogen, Hydroxyl, Niederalkoxy oder Cyano substituiertes Niederalkyl, Cycloalkyl, Benzyl oder die Gruppe der Formel

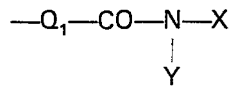
(2)

oder

$R_1$ und $R_2$ zusammen mit dem sie verbindenden Stickstoffatom einen fünf- oder sechsgliedrigen heterocyclischen Rest oder falls m 2 ist,

$R_2$ und $R_3$ zusammen mit der sie verbindenden Gruppierung

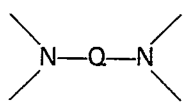

einen zweiwertigen, fünf- oder sechsgliedrigen, heterocyclischen Rest, oder

fals m mehr als 2 ist, jedes $R_3$ oder einzelne $R_3$ zusammen mit dem benachbarten $R_3$ und mit der sie verbindenden Gruppierung

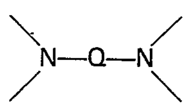

auch einen zweiwertigen, fünf- oder sechsgliedrigen, heterocyclischen Rest,

Q und $Q_1$ unabhängig voneinander Alkylen mit 1 bis 8 Kohlenstoffatomen, und

X Wasserstoff oder $—CH_2OH$,

Y Wasserstoff, Niederalkyl oder $—CH_2OH$ bedeuten,

mit einem

(b) gegebenenfalls verätherten Additionsprodukt von Formaldehyd an eine Harnstoff-, Thioharnstoff- oder Amino-1,3,5-Triazinverbindung oder dessen Bildungsgemisch in neutralem bis saurem wässerigen Medium umsetzt.

2. Verfahren gemäss Anspruch 1, dadurch gekennzeichnet, dass die Komponente (a) eine Aminoverbindung der Formel (1) ist, worin m 1 oder 2 ist.

3. Verfahren gemäss Anspruch 2, dadurch gekennzeichnet, dass die Komponente (a) eine Aminoverbindung der Formel

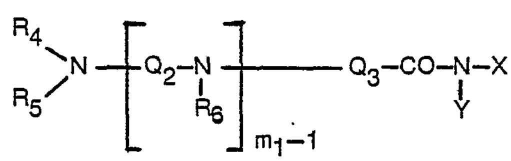
(3)

ist, worin

$m_1$ 1 oder 2 ist,

$R_4$, $R_5$ und $R_6$ unabhängig voneinander Wasserstoff, Niederalkyl, Benzyl oder die Gruppe der Formel

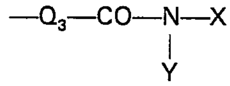

(4)

oder $R_4$ und $R_5$ zusammen mit dem sie verbindenden Stickstoffatom einen fünf- oder sechsgliedrigen, heterocyclischen Rest, oder falls $m_1$ 2 ist,

$R_5$ und $R_6$ zusammen mit der sie verbindenden Gruppierung

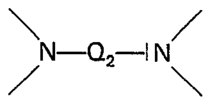

einen Piperazinring und

$Q_2$ und $Q_3$ unabhängig voneinander $C_1$—$C_3$-Alkylen bedeuten und

X und Y die in Anspruch 1 angegebene Bedeutung haben.

4. Verfahren gemäss Anspruch 3, dadurch gekennzeichnet, dass die Komponente (a) eine Aminoverbindung der Formel (3) ist, worin $R_4$, $R_5$ und $R_6$ Wasserstoff, Niederalkyl oder Benzyl bedeuten.

5. Verfahren gemäss Anspruch 3, dadurch gekennzeichnet, dass die Komponente (a) eine Aminoverbindung der Formel (3) ist, worin $m_1$ 1 ist.

6. Verfahren gemäss Anspruch 5, dadurch gekennzeichnet, dass die Komponente (a) eine Aminoverbindung der Formel (3) ist, worin $Q_3$ Aethylen oder Propylen, $R_4$ und $R_5$ Niederalkyl, Y Wasserstoff und X —$CH_2OH$ bedeuten.

7. Verfahren gemäss Anspruch 1, dadurch gekennzeichnet, dass die Komponenten (a) und (b) zusammen mindestens zwei N-Methylolamidgruppen aufweisen.

8. Verfahren gemäss einem der Ansprüche 1 bis 7, dadurch gekennzeichnet, dass als Komponente (b) methylolierte Harnstoffe oder Amino-1,3,5-triazine, die gegebenenfalls veräthert sind, verwendet werden.

9. Verfahren gemäss Anspruch 8, dadurch gekennzeichnet, dass als Komponente (b) N-Methylolharnstoffe oder N-Methylolmelamine verwendet werden.

10. Verfahren gemäss Anspruch 9, dadurch gekennzeichnet, dass als Komponente (b) Dimethylolharnstoff oder Trisbis Hexamethylolmelamin verwendet wird.

11. Verfahren gemäss Anspruch 10, dadurch gekennzeichnet, dass die Umsetzung in Gegenwart eines Katalysators, vorzugsweise Sulfaminsäure durchgeführt wird.

**Revendications pour les Etats contractants: BE CH DE FR GB IT LI NL SE**

1. Agent d'adsorption cationique caractérisé par le fait qu'il a été préparé dans un milieu aqueux neutre à acide en faisant réagir

(a) un composé aminé de formule:

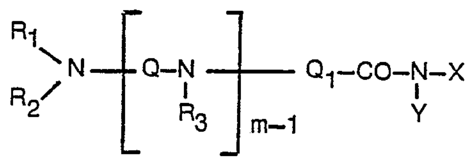

(1)

dans laquelle m est 1 à 5,

$R_1$, $R_2$ et $R_3$, indépendamment les uns des autres, représentent chacun un atome d'hydrogène; un groupe alkyle inférieur, éventuellement substitué par des radicaux halogéno, hydroxyle, alcoxy inférieur ou cyano; un groupe cyclo-alkyle ou benzyle, ou le groupe de formule

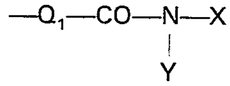

(2)

ou bien $R_1$ et $R_2$ forment ensemble avec l'atome d'azote qui les relie un reste hétérocyclique pentagonal ou hexagonal, ou bien dans le cas où m est 2, $R_2$ et $R_3$ forment ensemble avec le groupement

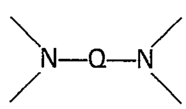

auquel ils sont liés un reste hétérocyclique pentagonal ou hexagonal bivalent, ou bien dans le cas où m est supérieur à 2, chaque $R_3$ ou certains $R_3$ forment ensemble avec le $R_3$ voisin et avec le groupement

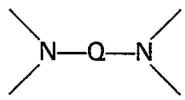

auquel ils sont liés, également un reste hétérocyclique pentagonal ou hexagonal, bivalent;

Q et $Q_1$ indépendamment l'un de l'autre sont chacun un groupe alkylène ayant 1 à 8 atomes de carbone, et

X est un atome d'hydrogène ou $—CH_2OH$,

Y est un atome d'hydrogène, un groupe alkyle inférieur ou $—CH_2OH$, avec

(b) un produit addition éventuellement éthérifié du formaldéhyde sur un dérivé d'urée, de thiourée ou d'amino-1,3,5-triazine ou sur leur mélange de formation.

2. Agent d'adsorption selon la revendication 1, caractérisé par le fait que le composant (a) est un composé aminé de formule (1) dans laquelle m vaut 1 ou 2.

3. Agent d'adsorption selon la revendication 2, caractérisé par le fait que le composant (a) est un composé aminé de formule

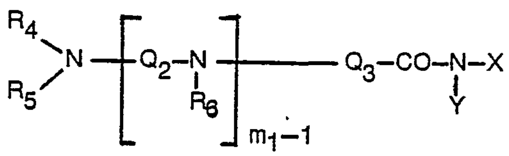 (3)

dans laquelle $m_1$ est 1 ou 2,

$R_4$, $R_5$ et $R_6$, indépendamment les uns des autres, sont chacun un atome d'hydrogène, un groupe alkyle inférieur, benzyle ou le groupe de formule

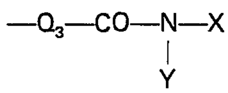

ou bien $R_4$ et $R_5$ forment ensemble avec l'atome d'azote qui les relie un reste hétérocyclique, pentagonal ou hexagonal, ou bien dans le cas où $m_1$ vaut 2,

$R_5$ et $R_6$ forment ensemble avec le groupement

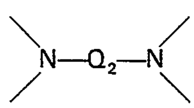 (4)

auquel ils sont liés un cycle pipérazine, et

$Q_2$ et $Q_3$, indépendamment l'un de l'autre, sont chacun un groupe alkylène en $C_1—C_3$, et

X et Y ont les significations données dans la revendication 1.

4. Agent d'adsorption selon la revendication 3, caractérisé par le fait que le composant (a) est un composé aminé de formule (3) dans laquelle $R_4$, $R_5$ et $R_6$ sont chacun un atome d'hydrogène, un groupe alkyle inférieur ou un groupe benzyle.

5. Agent d'adsorption selon la revendication 3, caractérisé par le fait que le composant (a) est un composé aminé de formule (3) dans laquelle $m_1$ est 1.

6. Agent d'adsorption selon la revendication 5, caractérisé par le fait que le composant (a) est un composé aminé de formule (3) dans laquelle $Q_3$ est un groupe éthylène ou propylène, $R_4$ et $R_5$ sont chacun un groupe alkyle inférieur; Y est un atome d'hydrogène et X est $—CH_2OH$.

7. Agent d'adsorption selon la revendication 1, caractérisé par le fait que les composants (a) et (b) présentent ensemble au moins deux groupes N-méthylolamide.

8. Agent d'adsorption selon l'une quelconque des revendications 1 à 7 caractérisé par le fait qu'on utilise comme composant (b) des urées méthylolées ou des amino-1,3,5-triazine méthylol qui sont éventuellement éthérifiées.

9. Agent d'adsorption selon la revendication 8, caractérisé par le fait qu'on utilise comme composant (b) des N-méthylolurées ou des N-méthylolmélamines et de préférence la N,N'-diméthylolurée ou les tris- à hexaméthylolmélamines.

10. Procédé pour la préparation d'un agent d'adsorption cationique, caractérisé par le fait qu'on fait réagir dans un milieu aqueux neutre à acide

(a) un composé aminé de formule:

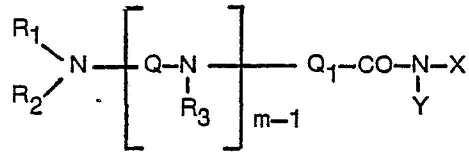 , (1)

dans laquelle m est 1 à 5

$R_1$, $R_2$ et $R_3$, indépendamment les uns des autres, représentent chacun un atome d'hydrogène; un groupe alkyle inférieur, éventuellement substitué par des radicaux halogéno, hydroxyle, alcoxy inférieur ou cyano; un groupe cyclo-alkyle ou benzyle ou le groupe de formule:

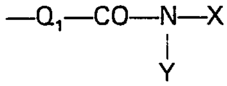 (2)

ou bien $R_1$ et $R_2$ forment ensemble avec l'atome d'azote qui les relie un reste hétérocyclique, pentagonal ou hexagonal ou dans le cas où m est 2,

$R_2$ et $R_3$ forment ensemble avec le groupement

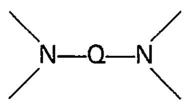

aquel ils sont liés un reste hétérocyclique, pentagonal ou hexagonal, bivalent, ou dans le cas où m est supérieur à 2 chaque $R_3$ ou certains $R_3$ forment ensemble avec le $R_3$ voisin et avec le groupement

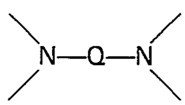

auquel ils sont lié également un reste hétérocyclique, pentagonal au hexagonal, bivalent,

Q et $Q_1$ indépendamment l'un de l'autre, sont chacun un groupe alkylène ayant 1 à 8 atomes de carbone, et

X est un atome d'hydrogène ou $—CH_2OH$

Y est un atome d'hydrogène, un groupe alkyle inférieur ou $—CH_2OH$, avec

(b) un produit d'addition éventuellement éthérifié du formaldéhyde sur un dérivé d'urée, de thiourée, ou d'amino-1,3,5-triazine, ou sur leur mélange de formation.

11. Procédé selon la revendication 10, caractérisé par le fait que la réaction est effectuée en présence d'un catalyseur, de préférence de l'acide sulfamique.

12. Utilisation des agents d'adsorption cationiques tels qu'ils sont définis dans les revendications 1 à 9, comme moyens de séparation des substances anioniques de solutions aqueuses les contenant.

**Revendications pour l'Etat contractant: AT**

1. Procédé pour la préparation d'un agent d'adsorption cationique, caractérisé par le fait qu'on fait réagir dans un milieu aqueux neutre à acide

(a) un composé aminé de formule:

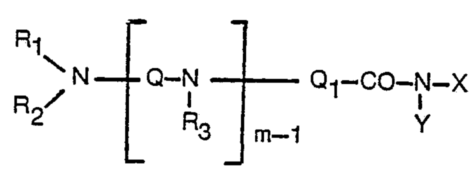 (1)

dans laquelle m est 1 à 5

$R_1$, $R_2$ et $R_3$, indépendamment les uns des autres, représentent chacun un atome d'hydrogène; un groupe alkyle inférieur, éventuellement substitué par des radicaux halogéno, hydroxyle, alcoxy inférieur ou cyano; un groupe cyclo-alkyle ou benzyle ou le groupe de formule:

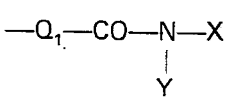 (2)

ou bien $R_1$ et $R_2$ forment ensemble avec l'atome d'azote qui les relie un reste hétérocyclique, pentagonal ou hexagonal, ou dans le cas où m est 2,

$R_2$ et $R_3$ forment ensemble avec le groupement

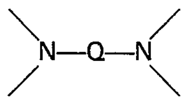

aquel ils sont liés un reste hétérocyclique, pentagonal ou hexagonal, bivalent, ou dans le cas où m est supérieur à 2 chaque $R_3$ ou certains $R_3$ forment ensemble avec le $R_3$ voisin et avec le groupement

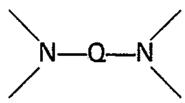

aquel ils sont liés également un reste hétérocyclique, pentagonal ou hexagonal, bivalent,

Q et $Q_1$, indépendamment l'un de l'autre, sont chacun un groupe alkylène ayant 1 à 8 atomes de carbone, et

X est l'atome d'hydrogène ou $—CH_2OH$,

Y est un atome d'hydrogène, un groupe alkyle inférieur ou $—CH_2OH$, avec

(b) un produit d'addition éventuellement éthérifié du formaldéhyde sur un dérivé d'urée, de thiourée ou d'amino-1,3,5-triazine, ou sur leur mélange de formation.

2. Procédé selon la revendication 1, caractérisé par le fait que le composant (a) est un composé aminé de formule (1) dans laquelle m vaut 1 ou 2.

3. Procédé selon la revendication 2, caractérisé par le fait que le composant (a) est un composé aminé de formule

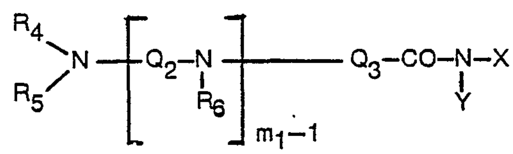
(3)

dans laquelle $m_1$ est 1 ou 2,

$R_4$, $R_5$ et $R_6$, indépendamment les uns des autres, sont chacun un atome d'hydrogène, un groupe alkyle inférieur, benzyle ou le groupe de formule

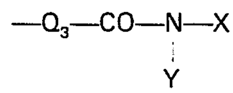
(4)

ou bien $R_4$ et $R_5$ forment ensemble avec l'atome d'azote qui les relie un reste hétérocyclique, pentagonal ou hexagonal, ou bien dans le cas où m vaut 2,

$R_5$ et $R_6$ forment ensemble avec le groupement

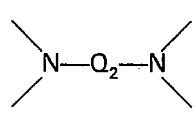

aquel ils sont liés un cycle pipérazine, et

$Q_2$ et $Q_3$, indépendamment l'un de l'autre, sont chacun un groupe alkylène en $C_1—C_3$, et

X et Y ont les significations données dans la revendication 1.

4. Procédé selon la revendication 3, caractérisé par le fait que le composant (a) est un composé aminé de formule (3) dans laquelle $R_4$, $R_5$ et $R_6$ sont chacun un atome d'hydrogène un groupe alkyle inférieur ou un groupe benzyle.

5. Procédé selon la revendication 3, caractérisé par le fait que le composant (a) est un composé aminé de formule (3) dans laquelle $m_1$ est 1.

6. Procédé selon la revendication 5, caractérisé par le fait que le composant (a) est un composé aminé de formule (3) dans laquelle $Q_3$ est un groupe éthylène ou propylène, $R_4$ et $R_5$ sont chacun un groupe alkyle inférieur; Y est un atome d'hydrogène, et X est $—CH_2OH$.

7. Procédé selon la revendication 1, caractérisé par le fait que les composants (a) et (b) présentent ensemble au moins deux groupes N-méthylolamide.

8. Procédé selon l'une quelconque des revendications 1 à 7, caractérisé par le fait qu'on utilise

comme composant (b) des urées méthylolées ou des amino-1,3,5-triazines méthylolées, qui sont éventuellement éthérifiées.

9. Procédé selon la revendication 8, caractérisé par le fait qu'on utilise comme composant (b) des N-méthylolurées ou des N-méthylolmélamines.

10. Procédé selon la revendication 9, caractérisé par le fait qu'on utilise comme composant (b) la diméthylolurée ou les tris à -hexaméthylolmélamine.

11. Procédé selon la revendication 10, caractérisé par le fait que la réaction est effectuée en présence d'un catalyseur, de préférence de l'acide sulfamique.

**Claims for the Contracting States: BE CH DE FR GB IT LI NL SE**

1. A cationic adsorption agent which is obtained by reaction of
(a) an amino compound of the formula

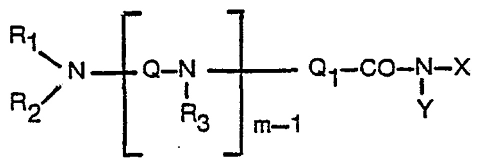
(1)

wherein m is 1 to 5, each of $R_1$, $R_2$ and $R_3$ independently is hydrogen, lower alkyl which is unsubstituted or substituted by halogen, hydroxyl, lower alkoxy or cyano, or is cycloalkyl, benzyl or the group of the formula

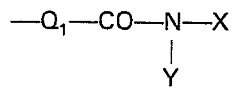
(2)

or $R_1$ and $R_2$, together with the nitrogen atom to which they are attached, denote a 5- or 6-membered heterocyclic radical, or, if m is 2, $R_2$ and $R_3$, together with the grouping

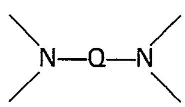

which links them, denote a divalent 5- or 6-membered heterocyclic radical, or, if m is greater than 2, each $R_3$, or individual substituents $R_3$, together with the adjacent $R_3$ and the grouping

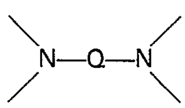

which links them, also denote a divalent 5- or 6-membered heterocyclic radical, each of Q and $Q_1$ independently is alkylene of 1 to 8 carbon atoms, X is hydrogen or $—CH_2OH$, and Y is hydrogen, lower alkyl or $—CH_2OH$,
with

(b) a free or etherified adduct of formaldehyde with a urea, thiourea or amino-1,3,5-triazine, in neutral to acid aqueous medium.

2. An adsorption agent according to claim 1, wherein component (a) is an amino compound of the formula (1), wherein m is 1 or 2.

3. An adsorption agent according to claim 2, wherein component (a) is an amino compound of the formula

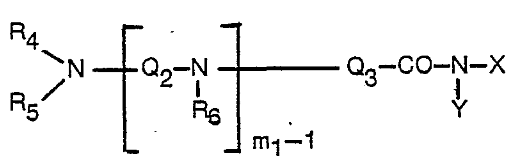
(3)

wherein $m_1$ is 1 or 2, each of $R_4$, $R_5$ and $R_6$ independently is hydrogen, lower alkyl, benzyl or the group of the formula

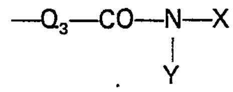

(4)

or $R_4$ and $R_5$ together with the nitrogen atom to which they are attached denote a 5- or 6-membered heterocyclic radical, or, if $m_1$ is 2, $R_5$ and $R_6$, together with the grouping

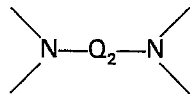

which links them, form a piperazino ring, and each of $Q_2$ and $Q_3$ is $C_1$—$C_3$alkylene and X and Y are as defined in claim 1.

4. An adsorption agent according to claim 3, wherein component (a) is an amino compound of the formula (3), wherein each of $R_4$, $R_5$ and $R_6$ is hydrogen, lower alkyl or benzyl.

5. An adsorption agent according to claim 3, wherein component (a) is an amino compound of the formula (3), where $m_1$ is 1.

6. An adsorption agent according to claim 5, wherein component (a) is an amino compound of the formula (3), wherein $Q_3$ is ethylene or propylene, each of $R_4$ and $R_5$ is lower alkyl, Y is hydrogen and X is —$CH_2OH$.

7. An adsorption agent according to claim 1, wherein components (a) and (b) together contain at least two N-methylolamide groups.

8. An adsorption agent according to any one of claims 1 to 7, wherein component (b) is a methylolated urea or an amino-1,3,5-triazine, each of which is free or etherified.

9. An adsorption agent according to claim 8, wherein component (b) is a N-methylol urea or N-methylol melamine, preferably N,N'-dimethylolurea or tri- to hexamethylol melamine.

10. A process for the preparation of a cationic adsorption agent, which comprises reacting

(a) an amino compound of the formula

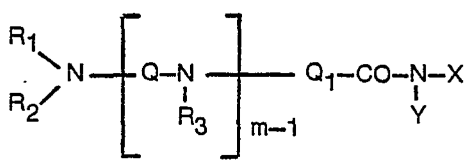

(1)

where m is 1 to 5, each of $R_1$, $R_2$ and $R_3$ independently is hydrogen, lower alkyl which is unsubstituted or substituted by halogen, hydroxyl, lower alkoxy or cyano, or is cycloalkyl, benzyl or the group of the formula

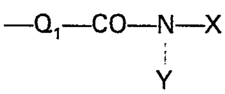

(2)

or $R_1$ and $R_2$, together with the nitrogen atom to which they are attached, denote a 5- or 6-membered heterocyclic radical, or, if m is 2, $R_2$ and $R_3$, together with the grouping

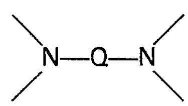

which links them, denote a divalent 5- or 6-membered heterocyclic radical, or, if m is greater than 2, each $R_3$, or individual substituents $R_3$, together with the adjacent $R_3$ and the grouping

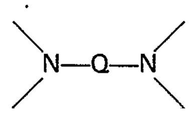

which links them, also denote a divalent 5- or 6-membered heterocyclic radical, each of Q and $Q_1$ independently is alkylene of 1 to 8 carbon atoms, X is hydrogen or —$CH_2OH$, and Y is hydrogen, lower alkyl or —$CH_2OH$,

with

(b) a free or etherified adduct of formaldehyde with a urea, thiourea or amino-1,3,5-triazine, or the production mixture thereof, in neutral to acid aqueous medium.

11. A process according to claim 10, wherein the reaction is carried out in the presence of a catalyst, preferably sulfamic acid.

12. The use of a cationic adsorption agent as defined in any one of claims 1 to 9 for the removal of anionic substances from aqueous solutions.

**Claims for the Contracting State: AT**

1. A process for the preparation of a cationic adsorption agent, which comprises reacting (a) an amino compound of the formula

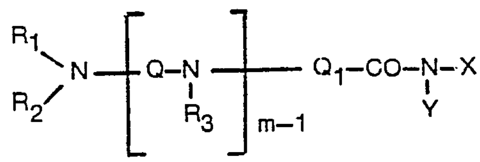
(1)

wherein m is 1 to 5, each of $R_1$, $R_2$ and $R_3$ independently is hydrogen, lower alkyl which is unsubstituted or substituted by halogen, hydroxyl, lower alkoxy or cyano, or is cycloalkyl, benzyl or the group of the formula

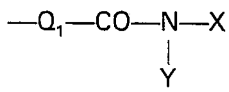
(2)

or $R_1$ and $R_2$, together with the nitrogen atom to which they are attached, denote a 5- or 6-membered heterocyclic radical, or, if m is 2, $R_2$ and $R_3$, together with the grouping

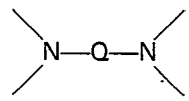

which links them, denote a divalent 5- or 6-membered heterocyclic radical, or, if m is greater than 2, each $R_3$, or individual substituents $R_3$, together with the adjacent $R_3$ and the grouping

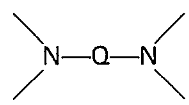

which links them, also denote a divalent 5- or 6-membered heterocyclic radical, each of Q and $Q_1$ independently is alkylene of 1 to 8 carbon atoms, X is hydrogen or $—CH_2OH$, and Y is hydrogen, lower alkyl or $—CH_2OH$,
with

(b) a free or etherified adduct of formaldehyde with a urea, thiourea or amino-1,3,5-triazine, or the production mixture thereof, in neutral to acid aqueous medium.

2. A process according to claim 1, wherein component (a) is an amino compound of the formula (1), wherein m is 1 or 2.

3. A process according to claim 2, wherein component (a) is an amino compound of the formula

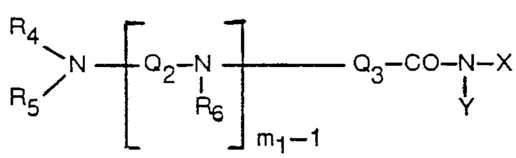
(3)

where $m_1$ is 1 or 2, each of $R_4$, $R_5$ and $R_6$ independently is hydrogen, lower alkyl, benzyl or the group of the formula

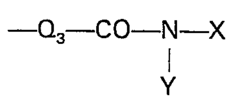
(4)

or $R_4$ and $R_5$ together with the nitrogen atom to which they are attached denote a 5- or 6-membered heterocyclic radical, or, if $m_1$ is 2, $R_5$ and $R_6$, together with the grouping

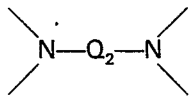

which links them, form a piperazino ring, and each of $Q_2$ and $Q_3$ is $C_1$—$C_3$alkylene and X and Y are as defined in claim 1.

4. A process according to claim 3, wherein component (a) is an amino compound of the formula (3), wherein each of $R_4$, $R_5$ and $R_6$ is hydrogen, lower alkyl or benzyl.

5. A process according to claim 3, wherein component (a) is an amino compound of the formula (3), wherein $m_1$ is 1.

6. A process according to claim 5, wherein component (a) is an amino compound of the formula (3), wherein $Q_3$ is ethylene or propylene, each of $R_4$ and $R_5$ is lower alkyl, Y is hydrogen and X is —$CH_2OH$.

7. A process according to claim 1, wherein components (a) and (b) together contain at least two N-methylolamide groups.

8. A process according to any one of claims 1 to 7, wherein component (b) is a methylolated urea or an amino-1,3,5-triazine, each of which is free or etherified.

9. A process according to claim 8, wherein component (b) is a N-methylol urea or N-methylol melamine.

10. A process according to claim 9, wherein component (b) is dimethylolurea or tri- to hexamethylol melamine.

11. A process according to claim 10, wherein the reaction is carried out in the presence of a catalyst, preferably sulfamic acid.